# EUROPÄISCHE PATENTANMELDUNG

(11) **EP 2 612 577 A1**
(43) Veröffentlichungstag der Anmeldung: **10.07.2013**
(21) Anmeldenummer: 12405003.0
(22) Anmeldetag: 06.01.2012
(51) Int. Cl.: A47J 31/00, A47J 31/46, A47J 31/06

(54) **Brühvorrichtung zum Zubereiten eines Heissgetränkes und Verfahren zum Zubereiten eines Heissgetränkes**

(71) Anmelder: Jura Elektroapparate AG, 4626 Niederbuchsiten (CH)
(72) Erfinder: Büttiker, Philipp, 4625 Oberbuchsiten (CH)
(74) Vertreter: EGLI-EUROPEAN PATENT ATTORNEYS

(57) **Zusammenfassung**

Es wird eine Brühvorrichtung (100) zum Zubereiten eines Heissgetränkes, insbesondere eines Kaffeegetränkes, sowie ein Verfahren zum Zubereiten eines Heissgetränkes, insbesondere eines Kaffeegetränkes angegeben. Mit dem Ziel, vergleichsweise grosse Heissgetränkeportionen in möglichst kurzer Zeit bei gleichzeitiger Erhaltung der Heissgetränkequalität insbesondere im Hinblick auf möglicherweise herausgelöste Bitterstoffe zu gewährleisten, sieht die erfindungsgemässe Lösung vor, dass die Brühvorrichtung (100) zusätzlich zu einer Brüheinheit (60) mindestens eine erste Heisswasserquelle (41) und mindestens eine zweite Heisswasserquelle (42) aufweist, wobei weiterhin mindestens eine Brühwasser-Zuführeinrichtung (31, 51a, 51b) zum Zuführen von Heisswasser aus der mindestens einen Heisswasserquelle (41) zu der Brüheinheit (60) und mindestens einer Heisswasser-Mischeinrichtung (32, 52c, 53) zum bedarfsweisen Zumischen von Heisswasser aus der mindestens einen Heisswasserquelle (42) stromabwärts der Brüheinheit (60) vorgesehen sind, und wobei die Brühvorrichtung zusätzlich eine Steuerungseinrichtung (20) zum Ansteuern der mindestens einen Heisswasser-Mischeinrichtung (32, 52c, 53) aufweist, wobei die Steuerungseinrichtung ausgelegt ist, das Ansteuern in Abhängigkeit einer vorab festgelegten oder festlegbaren Menge auszugebenden Heissgetränkes vorzunehmen.

## Beschreibung

Die vorliegende Erfindung betrifft eine Brühvorrichtung zum Zubereiten eines Heissgetränkes, insbesondere eines Kaffeegetränkes sowie ein Verfahren zum Zubereiten eines Heissgetränkes, insbesondere eines Kaffeegetränkes.

Aus der Technik sind Brühvorrichtungen insbesondere zum automatischen Zubereiten von Heissgetränken wie beispielsweise Kaffeegetränken bekannt, welche eine zumeist automatisch mit der aufzubrühenden Getränkegrundlage, beispielsweise gemahlenem Kaffeepulver befüllbare Brüheinheit aufweisen. Nachdem die Brüheinheit einer derartigen herkömmlichen Brühvorrichtung vorzugsweise automatisch mit dem gemahlenen Kaffeepulver befüllt worden ist, wird in einem anschliessenden Schritt der Brüheinheit ein Strom heissen Wassers, des sogenannten Brühwassers zugeführt, so dass an einem ausgabeseitigen Ende der Brüheinheit das fertig gebrühte, zubereitete Heissgetränk, also beispielsweise das Kaffeegetränk austritt. In einer automatisch arbeitenden Brühvorrichtung, welche beispielsweise Bestandteil eines Kaffeevollautomaten oder dergleichen ist, wird das die Brüheinheit verlassende Heissgetränk anschliessend über Leitungssysteme wie beispielsweise flexible Schläuche einer Auslasseinheit zugeführt, welche das gebrühte Heissgetränk dann in ein entsprechendes Gefäss wie beispielsweise eine Tasse ausgeben.

Was die persönlichen oder auch kulturell geprägten Präferenzen eines auf derartige Weise gebrühten Heissgetränkes, wie beispielsweise Kaffeegetränkes angeht, so unterscheiden sich die Brüharten teilweise erheblich in Bezug auf die Menge des eingesetzten Kaffeepulvers wie auch in Bezug auf die Portionsgrösse einer einzelnen Heissgetränkeportion. So sind beispielsweise kleine sogenannte Kaffeeprodukte wie Ristretto und auch Espresso bekannt, bei welchen eine vergleichsweise geringe Heisswasserportion pro Getränk durch die Brüheinheit geleitet wird. Andererseits ist es aber mit den herkömmlichen Brühvorrichtungen ebenso möglich, ein Kaffeeprodukt auszugeben, welches ausgabeseitig eine im Vergleich zu einem gewöhnlichen Espresso sehr grosse Heissgetränkeportion darstellt. Wenngleich die Einführmenge von gemahlenem Kaffeepulver in die Brüheinheit variiert werden kann, ist sie durch das hierfür zur Verfügung stehende Volumen der Brüheinheit nach oben begrenzt.

Bei den herkömmlichen Brühvorrichtungen und den herkömmlichen Verfahren zum Zubereiten von Heissgetränken, insbesondere Kaffeegetränken, stellt sich daher das Problem, dass beim Bezug von sehr grossen Heissgetränkeportionen die Menge an Mahlgut, beispielsweise Kaffeepulver, welche für eine derart grosse Portion benötigt würde, das begrenzte Volumen der Brüheinheit übersteigt. Es ist nun zwar möglich, eine grössere Wassermenge durch die Brüheinheit zu leiten, jedoch sind bei der Zubereitung einer derart grossen Kaffeeportion die erwünschten Geschmacksstoffe und die gewünschten Aromen bereits relativ zu Beginn des Kaffeebezuges herausgelöst worden. Durch das anschliessende Durchleiten zusätzlichen Brühwassers durch das in Bezug auf das gewünschte Kaffeearoma bereits verbrauchte Mahlgut werden unerwünschte Bitterstoffe aus dem Mahlgut herausgelöst, was den Geschmack einer grossen Kaffeeportion leicht verderben kann. Ferner steigt die Zeitdauer für die Zubereitung grösserer Heissgetränkemengen an, d.h. im Vergleich zu der Zubereitung eines Kaffeeproduktes mit einer relativ kleinen Bezugsmenge wie beispielsweise einer Espressoportion vergeht für den Bezug grösserer Kaffeeportionen eine unerwünscht lange Zeitspanne.

Der vorliegenden Erfindung lag daher die Aufgabe zugrunde, eine oben beschriebene herkömmliche Brühvorrichtung zum Zubereiten eines Heissgetränkes sowie ein entsprechendes Verfahren derart weiterzubilden, dass selbst beim Bezug grosser Heizgetränkeportionen ein Heissgetränk von sehr guter Qualität ausgegeben wird und gleichzeitig die Zeit für den Bezug, d.h. die Zubereitung einer derartigen grossen Portion Heissgetränkes verkürzt wird.

Erfindungsgemäss wird diese Aufgabe bei einer Brühvorrichtung dadurch gelöst, dass die Brühvorrichtung zusätzlich zu der Brüheinheit mindestens eine erste Heisswasserquelle und mindestens eine zweite Heisswasserquelle aufweist und dass mindestens eine Brühwasser-Zuführeinrichtung zum Zuführen von Heisswasser aus der mindestens einen ersten Heisswasserquelle zu der Brüheinheit und mindestens eine Heisswasser-Mischeinrichtung zum bedarfsweisen Zumischen von Heisswasser aus der mindestens einen zweiten Heisswasserquelle stromabwärts der Brüheinheit vorgesehen ist, wobei die Brühvorrichtung zusätzlich eine Steuerungseinrichtung zum Ansteuern der mindestens einen Heisswasser-Mischeinrichtung aufweist, wobei die Steuerungseinrichtung ausgelegt ist, das Ansteuern in Abhängigkeit einer vorab festgelegten oder festlegbaren Menge auszugebenden Heissgetränkes vorzunehmen. In Bezug auf das Verfahren zum Zubereiten eines Heissgetränkes, insbesondere eines Kaffeegetränkes, in einer Brühvorrichtung wird die Aufgabe erfindungsgemäss dadurch gelöst, dass zunächst eine Menge auszugebenden Heissgetränkes festgelegt und anschliessend eine Heisswasserportion aus mindestens einer ersten Heisswasserquelle zu einer Brüheinheit der Brühvorrichtung zugeführt wird. Das Verfahren sieht erfindungsgemäss weiterhin vor, dass ein Zumischbedarf von Heisswasser in Abhängigkeit von der festgelegten Menge ermittelt wird, und dass dann, wenn ein Zumischbedarf ermittelt wurde, Heisswasser aus mindestens einer zweiten Heisswasserquelle stromabwärts der Brüheinheit zugemischt wird, so dass das derart erhaltene Heissgetränk in einer Heissgetränk-Ausgabeleitung ausgegeben werden kann.

Die durch die Erfindung erzielbaren Vorteile liegen klar auf der Hand: So ist dadurch, dass bei einem entsprechenden Bedarf, d.h. dann, wenn eine grosse Heissgetränkeportion vorgewählt worden ist, Heisswasser dem aus der Brüheinheit ausgegebenen Brühproduktes zugegeben wird, sichergestellt, dass nur die bezogen auf die Befüllmenge der Brüheinheit optimale Brühwasserportion durch die Brüheinheit hindurchgeleitet wird, so dass nur die gewünschten Geschmacksstoffe und Aromen während des Brühvorganges ausgetragen werden und weitestgehend keine unerwünschten Bitterstoffe beim Passieren der Brüheinheit gelöst werden. Durch das bedarfsweise Zumischen von Heisswasser zu dem aus der Brüheinheit ausgegebenen Brühprodukt ist somit dennoch gewährleistet, dass eine ausreichend grosse Portion entsprechend der vorab festgelegten oder festlegbaren Menge aus der Brühvorrichtung ausgegeben wird. Gleichzeitig ist dadurch, dass dieses im Bedarfsfall zumischbare Heisswasser einer zweiten Heisswasserquelle entnommen wird, welche nicht die Brüheinheit mit Brühwasser versorgt, eine geringere Gesamtbezugszeit bzw. Gesamtzubereitungszeit für das Heissgetränk als bei den herkömmlichen Brühvorrichtungen und dem herkömmlichen Verfahren erreicht werden kann, so dass auf die Zubereitung eines grossen Kaffeeproduktes nicht oder nur unwesentlich länger gewartet werden muss, als auf die erfindungsgemässe Zubereitung eines vergleichsweise kleinen Kaffeeproduktes wie beispielsweise eines Espressos.

In einer Ausführungsform der erfindungsgemässen Brühvorrichtung ist vorgesehen, dass die Temperatur des zugemischten Heisswassers aus der mindestens einen zweiten Heisswasserquelle unterschiedlich ist von der Temperatur des der Brüheinheit zugeführten Heisswassers, welches aus der ersten Heisswasserquelle entnommen wird. Durch unterschiedliche Temperaturen des Brühwassers einerseits sowie das stromabwärts der Brüheinheit bedarfsweise zumischbare Wasser andererseits kann dann die Temperatur des auszugebenden Mischproduktes, d.h. des fertigen Heissgetränkes angepasst und auf einen optimalen Wert, in der Regel also eine optimale Trinktemperatur gebracht werden. Es kann hierbei vorgesehen sein, die Temperatur des Brühwassers, die Temperatur des bedarfsweise beizumischenden Heisswassers oder auch beide Temperaturen unabhängig voneinander zu beeinflussen, beispielsweise zu steuern oder zu regeln. Durch gezielte Temperierung des jeweils von den jeweiligen Heisswasserquellen ausgegebenen Wassers kann dadurch in positiver Weise die Temperatur des auszugebenden Heissgetränkes in einem weiten Bereich variiert werden, ohne den Kaffee durch eine unpassende Brühwassertemperatur in seinem Geschmack negativ zu beeinflussen.

Insbesondere kann es vorgesehen sein, dass die Temperatur des zugemischten Heisswassers aus der mindestens einen zweiten Heisswasserquelle höher ist als die Temperatur des der Brüheinheit zugeführten Heisswassers aus der mindestens einen ersten Heisswasserquelle. Während die Brühtemperatur, d.h. die Temperatur des Brühwassers aus der mindestens einen ersten Heisswasserquelle, welches der Brüheinheit zugeführt wird, im Regelfall im Bereich zwischen 90 und 95°C liegt, kann dann durch Beimischung von Heisswasser, welches oberhalb dieses Bereiches liegt, also mehr als 90° und vorzugsweise mehr als 95° beträgt, erreicht werden, dass der Kaffee bei seiner Ausgabe eine optimale Trinktemperatur, beispielsweise im Bereich zwischen 80 und 85°C erreicht, ohne dass der Kaffee in der Brüheinheit durch eine zu hohe Brühwassertemperatur negativ beeinflusst wird und Bitterstoffe herausgelöst werden.

Weiterhin kann es vorgesehen sein, dass die Brüheinheit eine Brüheinheit-Ausgabeleitung aufweist, welche über einen Mischknotenpunkt in eine Heissgetränk-Ausgabeleitung mündet. Hierbei ist die zweite Heisswasserquelle über eine Heisswasser-Ausgabeleitung mit dem Mischknotenpunkt verbunden. Ein derartiger Mischknotenpunkt lässt sich verhältnismässig einfach realisieren und sorgt für eine ausreichende Durchmischung des von der Brüheinheit ausgegebenen Brühproduktes und des gegebenenfalls hinzugemischten Heisswassers aus der zweiten Heisswasserquelle.

Hierbei kann es vorgesehen sein, dass der Mischknotenpunkt stromaufwärts einer mit mindestens einem Kaffeegetränkeauslass versehenen Auslasseinheit angeordnet ist. Hierdurch ergibt sich der Vorteil, dass eine ausreichende und vorteilhaft homogene Mischung in der sich an den Mischknotenpunkt anschliessenden Heissgetränk-Ausgabeleitung vor der Auslasseinheit stattfindet, so dass die Auslasseinheit relativ einfach ausgebildet sein kann.

Genauso gut ist es aber auch möglich, den Mischknotenpunkt innerhalb einer derartigen Auslasseinheit anzuordnen, um dort beispielsweise durch eine entsprechende Ausgestaltung des Mischknotenpunktes für eine zusätzliche die Durchmischung fördernde Durchwirbelung der Teilströme zu sorgen, was ein möglichst homogen durchmischtes fertig bereitetes Heissgetränk an den Kaffeegetränkeauslässen der Auslasseinheit ergibt.

Um ein besonders einfaches bedarfsweises Zumischen von Heisswasser aus der mindestens einen zweiten Heisswasserquelle stromabwärts der Brüheinheit zu ermöglichen, kann es vorgesehen sein, dass die mindestens eine Heisswasser-Mischeinrichtung zusätzlich ein ansteuerbares Wegeventil aufweist. Durch die ansteuerbare Ausgestaltung eines derartigen Wegeventils ist nach dem positiven Ermitteln eines Zumischbedarfes von Heisswasser durch ein einfaches Signal, welches von der Steuerungseinrichtung abgegeben wird, an das ansteuerbare Wegeventil ein derartiges bedarfsweises Zumischen des Heisswassers aus der mindestens einen zweiten Heisswasserquelle möglich.

Weiterhin ist es vorgesehen, dass die Brühvorrichtung einen mit der mindestens einen zweiten Heisswasserquelle verbundenen Ventilblock aufweist, wobei der Ventilblock ein bedarfsweises Zuleiten von Heisswasser aus der zweiten Heisswasserquelle zu einem weiteren Auslass zulässt. Ein derartiger weiterer Auslass kann vorzugsweise eine Milchschäumdüse sein. Hierdurch ist es möglich, zusätzlich zu dem bedarfsweisen Zumischen von Heisswasser aus der mindestens einen zweiten Heisswasserquelle stromabwärts der Brüheinheit in das auszugebende Heissgetränk unabhängig davon, ob tatsächlich ein Zumischbedarf ermittelt wurde, mit dem Heisswasser der zweiten Heisswasserquelle auch eine Milchschäumdüse zu betreiben, was den Bauaufwand und somit auch den Kostenaufwand einer derartigen Brühvorrichtung durch die vorgesehene Doppelverwendung der mindestens einen zweiten Heisswasserquelle weiter reduziert.

Alternativ oder zusätzlich kann es vorgesehen sein, dass die Brühvorrichtung ferner eine Einrichtung zum bedarfsweisen Zuführen eines Reinigungsfluides zu der Heissgetränkeausgabeleitung aufweist. Ein derartiges Reinigungsfluid ist insbesondere ein mit mindestens einer der Heisswasserquellen erzeugter Wasserdampf, wobei hierbei vorzugsweise die mindestens eine zweite Heisswasserquelle zum Einsatz kommt. Insbesondere beim Verwenden der mindestens einen zweiten Heisswasserquelle zum Erzeugen eines derartigen Reinigungsfluides ist bei einer im Regelfall höheren vorgesehenen Temperatur des aus der zweiten Heisswasserquelle ausgegebenen Heisswassers keine veränderte Auslegung des Temperaturbereiches dieser zweiten Heisswasserquelle erforderlich. Ein derartiges Reinigungsfluid wird dann bedarfsweise, beispielsweise nach dem Zubereiten einer Portion Heissgetränk, in das Schlauchsystem zwischen der Brüheinheit und dem Kaffeeauslauf ausgegeben. Hierbei ist es selbstverständlich auch möglich, einen derartigen Spül- bzw. Reinigungsvorgang zunächst mit Heisswasser durchzuführen, um dann durch eine kurzzeitige Temperaturerhöhung der jeweiligen Heisswasserquelle, vorzugsweise der zweiten Heisswasserquelle, einen Dampfstoss zu erzeugen. Hierdurch wird das in der Regel als Heissgetränk-Ausgabeleitung vorgesehene Schlauchsystem zwischen der Brüheinheit und dem Kaffeeauslauf nicht lediglich gespült und gereinigt, sondern durch den Dampfstoss zusätzlich entleert. In Verbindung mit der beschriebenen Reinigung des Kaffeeauslaufes mit einem Wasser-Dampfgemisch wird dann die Hygiene verbessert.

Im Folgenden wird eine Ausführungsform der erfindungsgemässen Brühvorrichtung anhand einer Zeichnung näher erläutert.

Es zeigt:

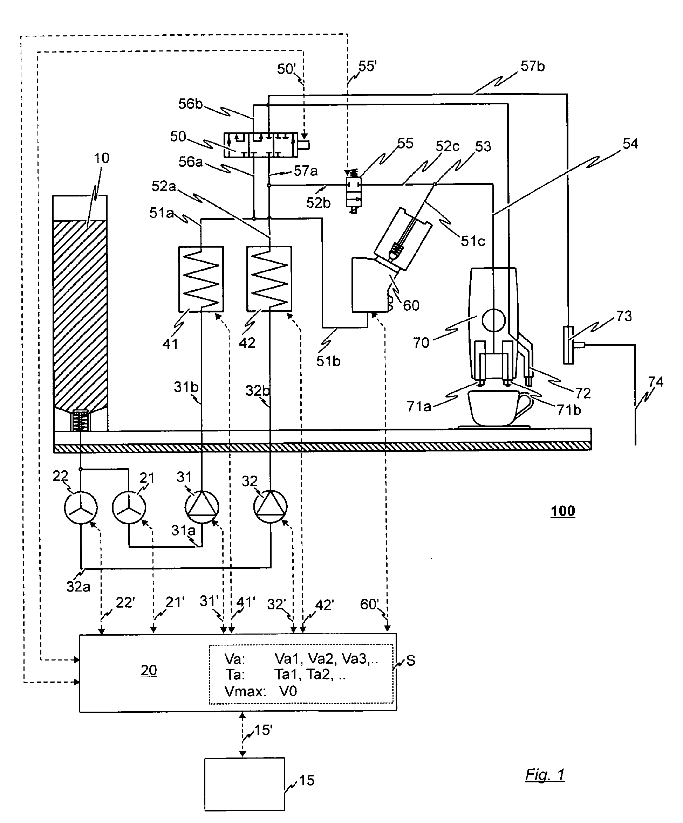

- Fig. 1: eine schematische Ansicht der erfindungsgemässen Brühvorrichtung gemäss einer Ausführungsform der Erfindung.

Fig. 1 zeigt in einer schematischen Ansicht die erfindungsgemässe Brühvorrichtung 100 gemäss einer Ausführungsform der Erfindung. Ein Flüssigkeitsbehälter 10, beispielsweise ein Wassertank, ist über eine Flüssigkeitsleitung 31a mit einer ersten Förderpumpe 31 und unabhängig davon über eine Flüssigkeitsleitung 32a mit einer zweiten Förderpumpe 32 verbunden. Die erste Förderpumpe 31 bildet den Teil einer Brühwasser-Zuführeinrichtung und ist über eine Flüssigkeitsleitung 31b und eine erste Heisswasserquelle 41, im Ausführungsbeispiel gemäss der Fig. 1 als Durchlauferhitzer ausgebildet, mit einer Heisswasser-Zuführleitung 51a verbunden, welche in eine Brüheinheit-Zuleitung 51b mündet. Die Brüheinheit-Zuleitung 51b versorgt eine Brüheinheit 60 mit Heisswasser (Brühwasser) aus der ersten Heisswasserquelle 41. Hierbei wird eine (in Fig. 1 nicht dargestellte) Brühkammer der Brüheinheit 60 für jeden Brühvorgang, d.h. für jeden Portionsbezug eines Heissgetränkes vorzugsweise automatisch als Bestandteil beispielsweise eines Kaffee-Vollautomaten neu mit Mahlgut, insbesondere mit gemahlenem Kaffeepulver befüllt. Die Brüheinheit-Zuleitung 51b ist dabei mit der Brühkammer der Brüheinheit 60 verbunden, sodass eine mittels der ersten Förderpumpe 31 über die Brüheinheit-Zuleitung 51b zur Brüheinheit 60 geförderte Portion Heisswasser (Brühwasser) aus der ersten Heisswasserquelle 41 in die Brühkammer fliessen kann und das Kaffeepulver in der Brühkammer mittels dieser Portion Heisswasser gebrüht werden kann, wobei ein gebrühtes Kaffeegetränk (Heissgetränk) entsteht.

Um einen automatischen Betrieb der Brüheinheit 60 bzw. Brühvorrichtung 100 zu ermöglichen, weist die Brühvorrichtung eine Steuerungseinrichtung 20 auf, welche beispielsweise als Mikroprozessor ausgebildet sein kann. Wie Fig. 1 andeutet, ist im vorliegenden Beispiel die Brüheinheit 60 mit der Steuerungseinrichtung 20 über eine (beispielsweise bidirektionale) Datenleitung 60' verbunden, über welche die Steuerungseinrichtung 20 zum Ansteuern der Brüheinheit 60 geeignete Steuerungssignale zur Brüheinheit 60 senden und/oder von der Brüheinheit 60 empfangen kann, beispielsweise um das Füllen der Brühkammer der Brüheinheit 60 mit einer vorgegebenen Menge gemahlenem Kaffeepulver (vor dem jeweiligen Brühvorgang) und das Entfernen des gebrühten Kaffeepulvers aus der Brühkammer der Brüheinheit 60 (nach der Zubereitung des jeweiligen Heissgetränks durch Brühen des Kaffeepulvers in der Brüheinheit 60).

Ausgangsseitig, d.h. stromabwärts, befindet sich an der Brüheinheit 60 eine Brüheinheit-Ausgabeleitung 51c, welche in einen Mischknotenpunkt 53 mündet. Diese Brüheinheit-Ausgabeleitung 51c ist mit der Brühkammer der Brüheinheit 60 verbunden, sodass das in der Brühkammer gebrühte Kaffeegetränk über die Brüheinheit-Ausgabeleitung 51c zum Mischknotenpunkt 53 fliessen kann. Dem Mischknotenpunkt 53 wird an einem weiteren Eingang über eine Heisswasser-Ausgabeleitung 52c Heisswasser aus der ebenfalls als Durchlauferhitzer ausgeführten zweiten Heisswasserquelle 42 zugeführt.

Um ein bedarfsweises Zuführen dieses zuzumischenden Heisswassers aus der zweiten Heisswasserquelle 42 zu ermöglichen, bildet die zweite Förderpumpe 32 einen Teil einer Heisswasser-Mischeinrichtung und führt Wasser aus dem Flüssigkeitsbehälter 10 über eine Flüssigkeitsleitung 32b der zweiten Heisswasserquelle 42 zu, welches diese zweite Heisswasserquelle 42 ausgangsseitig über eine Heisswasser-Zuführleitung 52a verlässt und über eine Wegeventil-Zuleitung 52b einem Wegeventil 55 zugeführt wird. Dieses Wegeventil 55 ist ansteuerbar ausgebildet und ermöglicht es so, durch entsprechende Ansteuerung mittels der Steuerungseinrichtung 20 durch bedarfsweises Ansteuern in Abhängigkeit einer vorab festgelegten oder festlegbaren Menge auszugebenden Heissgetränkes das Heisswasser der Heisswasser-Ausgabeleitung 52c zuzuführen. Um dieses Ansteuern des Wegeventils 55 zu ermöglichen, ist das Wegeventil 55 mit der Steuerungseinrichtung 20 über eine (beispielsweise bidirektionale) Datenleitung 55' verbunden, über welche die Steuerungseinrichtung 20 zum Ansteuern des Wegeventils 55 geeignete Steuerungssignale zum Wegeventil 55 senden und/oder vom Wegeventil 55 empfangen kann.

Wie Fig. 1 weiterhin andeutet, ist im vorliegenden Beispiel an der Flüssigkeitsleitung 31a ein erster Durchflussmesser 21 installiert, welcher dazu ausgebildet ist, einen Durchfluss von Wasser, d.h. diejenige Menge Wasser, welche pro Zeiteinheit durch die Flüssigkeitsleitung 31a zur ersten Förderpumpe 31 fliesst und mittels der ersten Förderpumpe 31 der ersten Heisswasserquelle 41 zugeführt wird, zu messen und ein Messsignal bereitzustellen, welches dem gemessenen Durchfluss entspricht. Dieses Messsignal kann von Steuerungseinrichtung 20 über eine (beispielsweise bidirektionale) Datenleitung 21', welche den ersten Durchflussmesser 21 mit der Steuerungseinrichtung 20 verbindet, empfangen werden, sodass der Steuerungseinrichtung 20 eine Information über den jeweils vom Durchflussmesser 21 gemessenen Durchfluss von Wasser in der Flüssigkeitsleitung 31a zur Verfügung steht. Weiterhin ist an der Flüssigkeitsleitung 32a ein zweiter Durchflussmesser 22 installiert, welcher dazu ausgebildet ist, einen Durchfluss von Wasser, d.h. diejenige Menge Wasser, welche pro Zeiteinheit durch die Flüssigkeitsleitung 32a zur zweiten Förderpumpe 32 fliesst und mittels der ersten Förderpumpe 32 der zweiten Heisswasserquelle 42 zugeführt wird, zu messen und ein Messsignal bereitzustellen, welches dem gemessenen Durchfluss entspricht. Dieses Messsignal kann von Steuerungseinrichtung 20 über eine (beispielsweise bidirektionale) Datenleitung 22', welche den zweiten Durchflussmesser 22 mit der Steuerungseinrichtung 20 verbindet, empfangen werden, sodass der Steuerungseinrichtung 20 eine Information über den jeweils vom Durchflussmesser 22 gemessenen Durchfluss von Wasser in der Flüssigkeitsleitung 32a zur Verfügung steht.

Wie Fig. 1 weiterhin andeutet, ist im vorliegenden Beispiel die erste Förderpumpe 31 mit der Steuerungseinrichtung 20 über eine (beispielsweise bidirektionale) Datenleitung 31' verbunden, über welche die Steuerungseinrichtung 20 zum Ansteuern der ersten Förderpumpe 31 geeignete Steuerungssignale zur ersten Förderpumpe 31 senden und/oder von der ersten Förderpumpe 31 empfangen kann. Auf diese Weise kann die Steuerungseinrichtung 20 die erste Förderpumpe 31 in Abhängigkeit von Messsignalen des ersten Durchflussmessers 21 steuern, sodass gewährleistet ist, dass die Steuerungseinrichtung 20 eine bestimmte Menge Wasser, welche in einem bestimmten Zeitintervall mittels der ersten Förderpumpe 31 über die Flüssigkeitsleitung 31b zur ersten Heisswasserquelle 41 und von der ersten Heisswasserquelle 41 über die Heisswasser-Zuführleitungen 51a und 51b zur Brüheinheit 60 und weiter durch die Brüheinheit 60 und die Brüheinheit-Ausgabeleitung 51c zum Mischknotenpunkt 53 gefördert wird, präzise kontrollieren kann.

Entsprechend ist die zweite Förderpumpe 32 mit der Steuerungseinrichtung 20 über eine (beispielsweise bidirektionale) Datenleitung 32' verbunden, über welche die Steuerungseinrichtung 20 zum Ansteuern der zweiten Förderpumpe 32 geeignete Steuerungssignale zur zweiten Förderpumpe 32 senden und/oder von der zweiten Förderpumpe 32 empfangen kann. Auf diese Weise kann die Steuerungseinrichtung 20 die zweite Förderpumpe 32 in Abhängigkeit von Messsignalen des zweiten Durchflussmessers 22 steuern, sodass gewährleistet ist, dass die Steuerungseinrichtung 20 eine bestimmte Menge Wasser, welche in einem bestimmten Zeitintervall mittels der zweiten Förderpumpe 32 über die Flüssigkeitsleitung 32b zur zweiten Heisswasserquelle 42 und von der zweiten Heisswasserquelle 42 über die Heisswasser-Zuführleitungen 52a, 52b und das Wegeventil 55 zum Mischknotenpunkt 53 gefördert wird, präzise kontrollieren kann.

Wenn also ein Zumischbedarf ermittelt wurde, wird die Steuerungseinrichtung 20 über die Datenleitung 55' ein entsprechendes Steuerungssignal an das Wegeventil 55 abgeben, so dass in dem Mischknotenpunkt 53, welcher in dem Ausführungsbeispiel gemäss Fig. 1 oberhalb einer noch näher zu erläuternden Auslasseinheit 70 angeordnet ist, ein Gemisch aus dem in die Brüheinheit-Ausgabeleitung ausgegebenen Brühproduktes und des zur Zubereitung der entsprechenden Kaffee-Portionsgrösse erforderlichen Heisswassers vorliegt. In dem Mischknotenpunkt 53 und gegebenenfalls weiter stromabwärts in der Heissgetränk-Ausgabeleitung 54 erfolgt dann eine Vermischung des Brühproduktes und des bedarfsweise zugemischten Heisswassers zum fertigen Heissgetränk, also insbesondere zum fertigen Kaffeegetränk.

Die Heissgetränk-Ausgabeleitung 54 mündet in dem in Fig. 1 gezeigten Ausführungsbeispiel in eine Auslasseinheit 70 und wird durch zwei Kaffeegetränkeauslässe 71a, 71b in ein Gefäss, z.B. eine Tasse, ausgegeben.

Wie Fig. 1 weiterhin andeutet, ist im vorliegenden Beispiel die erste Heisswasserquelle 41 mit der Steuerungseinrichtung 20 über eine (beispielsweise bidirektionale) Datenleitung 41' verbunden, über welche die Steuerungseinrichtung 20 zum Ansteuern der ersten Heisswasserquelle 41 geeignete Steuerungssignale zur ersten Heisswasserquelle 41 senden und/oder von der ersten Heisswasserquelle 41 empfangen kann. Die Steuerungseinrichtung 20 ist dabei dazu eingerichtet, die Heisswasserquelle 41 über die Datenleitung 41' derart anzusteuern, dass jeweils eine Portion Wasser, welche mittels der ersten Förderpumpe 31 über die Flüssigkeitsleitung 31b zur ersten Heisswasserquelle 41 gefördert wird, in der ersten Heisswasserquelle 41 auf eine von der Steuerungseinrichtung 20 vorbestimmte Temperatur aufgeheizt wird. Diese vorbestimmte Temperatur der in der ersten Heisswasserquelle 41 produzierten Portion Heisswasser kann (wie im Folgenden näher erläutert wird) in einem vorgegebenen Rahmen variierbar sein.

Entsprechend ist die zweite Heisswasserquelle 42 mit der Steuerungseinrichtung 20 über eine (beispielsweise bidirektionale) Datenleitung 42' verbunden, über welche die Steuerungseinrichtung 20 zum Ansteuern der zweiten Heisswasserquelle 42 geeignete Steuerungssignale zur zweiten Heisswasserquelle 42 senden und/oder von der zweiten Heisswasserquelle 42 empfangen kann. Die Steuerungseinrichtung 20 ist dabei dazu eingerichtet, die zweite Heisswasserquelle 42 über die Datenleitung 42' derart anzusteuern, dass jeweils eine Portion Wasser, welche mittels der zweiten Förderpumpe 32 über die Flüssigkeitsleitung 32b zur zweiten Heisswasserquelle 42 gefördert wird, in der zweiten Heisswasserquelle 42 auf eine von der Steuerungseinrichtung 20 vorbestimmte Temperatur aufgeheizt wird. Diese vorbestimmte Temperatur der in der zweiten Heisswasserquelle 42 produzierten Portion Heisswasser kann (wie im Folgenden näher erläutert wird) in einem vorgegebenen Rahmen variierbar sein.

Für ein optimales Brühergebnis und damit eine optimale Qualität des zubereiteten Heissgetränkes weist das von der ersten Heisswasserquelle 41 produzierte Heisswasser, welches der Brüheinheit 60 zugeleitet wird, eine optimale Brühtemperatur, beispielsweise im Bereich zwischen 90 und 95°C auf. Damit durch die Wärmeverluste in der Heissgetränk-Ausgabeleitung 54 und in der Auslasseinheit 70 aus den Kaffeegetränkeauslässen 71a, 71b ein Heissgetränk auf einer optimalen Trinktemperatur, beispielsweise auf einer Temperatur von ca. 80 bis 85°C, ausgegeben wird, erzeugt die zweite Heisswasserquelle 42 bedarfsweise zuzumischendes Heisswasser auf einer Temperatur, welche höher als die optimale Brühtemperatur des Heisswassers aus der ersten Heisswasserquelle 41 liegt und beispielsweise oberhalb von 90°C und vorzugsweise oberhalb von 95°C liegt. Ferner ist ein Ventilblock 50 vorgesehen, welcher über Heisswasser-Zuführleitungen 56a bzw. 57a an seinen Eingängen ebenfalls mit der ersten Heisswasserquelle 41 bzw. der zweiten Heisswasserquelle 42 verbunden ist. Der Ventilblock 50 ist dabei derart ansteuerbar, dass in einer ersten Ventilblockposition (in dem Ausführungsbeispiel gemäss Fig. 1 die ganz links gezeichnete Ventilposition) Heisswasser aus der ersten Heisswasserquelle 41 einem separat an der Auslasseinheit 70 vorgesehenen Heisswasserauslass über eine Spülleitung 56b zugeleitet wird. Zu diesem Zweck ist der Ventilblock 50 mit der Steuerungseinrichtung 20 über eine (beispielsweise bidirektionale) Datenleitung 50' verbunden, über welche die Steuerungseinrichtung 20 zum Ansteuern des Ventilblocks 50 geeignete Steuerungssignale zum Ventilblock 50 senden und/oder vom Ventilblock 50 empfangen kann. Hierdurch kann ein Heisswasserbezug anstelle eines Kaffeebezuges, beispielsweise zur Zubereitung von Tee, vorgenommen werden.

In einer zweiten Ventilblockposition (im dargestellten Ausführungsbeispiel gemäss Fig. 1 die ganz rechts eingezeichnete Ventilblockposition des Ventilblockes 50) wird hingegen Heisswasser aus der zweiten Heisswasserquelle 42 über eine Milchschäumdüsen-Zuleitung 57b einer Milchschaumdüse 73 zugeleitet. Die Milchschäumdüse 73 weist ferner eine Milchzuleitung 74 auf, so dass bei entsprechender Ansteuerung der Brühvorrichtung 100 bzw. des Wegeventils 55 sowie des Ventilblockes 50 gleichzeitig ein Heissgetränk aus der Auslasseinheit 70 und Milchschaum aus der Milchschäumdüse 73 entnommen werden können.

Im Folgenden werden weitere Einzelheiten der Steuerungseinrichtung 20 und ein Verfahren zum Zubereiten eines Heissgetränks mittels der Brühvorrichtung 100 beschrieben.

Wie Fig. 1 andeutet, ist die Steuerungseinrichtung 20 über eine Datenleitung 15' mit einer Bedienungsschnittstelle 15 verbunden, welche konventionell beispielsweise als Tastatur, Drehknopf, berührungsempfindlicher Bildschirm oder eine auf eine andere Weise realisiert sein kann. Die Bedienungsschnittstelle 15 ermöglicht es einem Benutzer der Brühvorrichtung 100, aus einer Mehrzahl von Heissgetränken, welche die Brühvorrichtung unter Kontrolle der Steuerungseinrichtung 20 zubereiten kann, ein Heissgetränk auszuwählen und - unter der Kontrolle der Steuerungseinrichtung 20 - die Zubereitung des vom Benutzer ausgewählten Heissgetränks zu veranlassen. Bei der Auswahl des Heissgetränks kann der Benutzer über die Bedienungsschnittstelle 15 nicht nur die Art des ausgewählten Heissgetränks (z.B. Espresso, Ristretto, Cappuccino, o.ä.) bestimmen, sondern auch andere Parameter festlegen, beispielsweise die vom Benutzer gewünschte Menge (bzw. das Volumen) und/oder die Temperatur einer Portion des ausgewählten Heissgetränks, welche die Brühvorrichtung 100 zubereiten und ausgeben soll.

Nachdem der Benutzer das von ihm gewünschte Heissgetränk mittels der Bedienungsschnittstelle 15 ausgewählt hat, verfügt die Steuerungseinrichtung 20 über alle notwendigen Informationen, um die Zubereitung des ausgewählten Heissgetränks zu veranlassen (durch Ansteuern der Brüheinheit 60, der ersten Förderpumpe 31 und der ersten Heisswasserquelle 41 und gegebenenfalls - bei einem entsprechenden Bedarf - durch Ansteuern der zweiten Förderpumpe 41, der zweiten Heisswasserquelle 42, des Ventilblocks 50 und/oder des Wegeventils 55).

Wie Fig. 1 andeutet, umfasst die Steuerungseinrichtung 20 einen Datenspeicher S, im welchem eine Reihe von Parametern zum Steuern der Zubereitung der verschiedenen Heissgetränke gespeichert sind. Unter anderem ist im Datenspeicher S für jedes der zubereitbaren bzw. auswählbaren Heissgetränke ein Parameter gespeichert, welcher die Menge Kaffeepulver angibt, die zur Zubereitung des Heissgetränks benötigt wird und welche zu diesem Zweck vor der Zubereitung des Heissgetränks automatisch in die Brühkammer der Brüheinheit 60 gefüllt wird.

Weiterhin sind im Datenspeicher S für jedes der zubereitbaren bzw. auswählbaren Heissgetränke ein oder mehrere vom Benutzer auswählbare Werte für einen Parameter Va gespeichert. Der Parameter Va gibt das Volumen der Portion des ausgewählten Heissgetränks an, welche die Brühvorrichtung 100 zubereiten und ausgeben soll. Im vorliegenden Beispiel gemäss Fig. 1 ist vorgesehen, dass der Parameter Va mehrere verschiedene Werte annehmen kann, z.B. Va1, Va2 oder Va3 (mit Va1 < Va2 < Va3).

Weiterhin können im Datenspeicher S für jedes der zubereitbaren bzw. auswählbaren Heissgetränke ein oder mehrere vom Benutzer auswählbare Werte für einen Parameter Ta gespeichert sein. Der Parameter Ta gibt die Temperatur der Portion des ausgewählten Heissgetränks an, welches die Brühvorrichtung 100 zubereiten und ausgeben soll. Im vorliegenden Beispiel gemäss Fig. 1 ist vorgesehen, dass der Parameter Ta mehrere verschiedene Werte annehmen kann, z.B. Ta1 oder Ta2 (mit Ta1 < Ta2).

Weiterhin ist im Datenspeicher S für jedes der zubereitbaren bzw. auswählbaren Heissgetränke ein vorgegebener Wert für einen Parameter Vmax gespeichert. Der Parameter bezeichnet das maximale Volumen einer Portion Heisswasser an, welche bei der Zubereitung des ausgewählten Heissgetränks zum Brühen des in die Brühkammer gefüllten Kaffeepulvers verwendet werden darf und der Brühkammer der Brüheinheit 60 aus der ersten Heisswasserquelle (41) zuzuführen ist. Im vorliegenden Beispiel gemäss Fig. 1 ist vorgesehen, dass der Parameter Vmax einen Wert annehmen kann, welcher in Fig. 1 mit V0 bezeichnet ist. V0 kann dabei beispielsweise von der jeweiligen Menge des Kaffeepulvers abhängig sein, welche zum Brühen des ausgewählten Heissgetränks verwendet wird.

Im Betrieb der Brühvorrichtung 100 steuert die Steuerungseinrichtung - nachdem ein Benutzer über die Bedienungsschnittstelle 15 ein Heissgetränk ausgewählt hat - zunächst die Brüheinheit 60 an, sodass die für die Zubereitung des ausgewählten Heissgetränks vorgesehene Menge Kaffeepulver in die Brühkammer der Brüheinheit 60 gefüllt wird. Anschliessend vergleicht die Steuerungseinrichtung 20 den vom Benutzer ausgewählten Wert für den Parameter Va mit dem vorgegebenen Wert für Vmax für das vom Benutzer ausgewählte Heissgetränk und ermittelt - abhängig vom Ergebnis dieses Vergleichs - ob zur Zubereitung des ausgewählten Heissgetränks ausschliesslich Heisswasser aus der ersten Heisswasserquelle 41 zur _Brüheinheit 60 zugeführt wird oder ob zusätzlich Heisswasser aus der zweiten Heisswasserquelle 42 am Mischknotenpunkt 53 (stromabwärts der Brüheinheit 60) zugemischt werden muss.

Angenommen, der vom Benutzer ausgewählte Wert für den Parameter Va ist beispielsweise der Wert Va1 gemäss Fig. 1, wobei Va1 ≤ V0. In diesem Fall besteht kein Bedarf, bei der Zubereitung des Heissgetränks Heisswasser aus der zweiten Heisswasserquelle 42 zuzumischen. In diesem Fall steuert die Steuerungseinrichtung 20 dass Wegeventil 55 derart an, dass eine Zufuhr von Heisswasser aus der zweiten Heisswasserquelle 42 in die Heisswasser-Ausgabeleitung 52c durch das Wegeventil 55 gesperrt ist. Weiterhin steuert die Steuerungseinrichtung 20 die erste Förderpumpe 31 und die erste Heisswasserquelle 41 derart an, dass der Brühkammer der Brüheinheit 60 eine Portion Heisswasser mit dem Volumen Va1 aus der ersten Heisswasserquelle 41 zugeführt wird, in der Brüheinheit 60 ein Kaffeegetränk (Heissgetränk) mit dem Volumen Va1 gebrüht und dieses Kaffeegetränk schliesslich über den Mischknotenpunkt 53 und die Auslasseinheit 70 ausgegeben wird.

Angenommen, der vom Benutzer ausgewählte Wert für den Parameter Va ist beispielsweise der Wert Va3 gemäss Fig. 1, wobei Va3 > V0. In diesem Fall besteht ein Bedarf, bei der Zubereitung des Heissgetränks Heisswasser aus der zweiten Heisswasserquelle 42 zuzumischen. In diesem Fall steuert die Steuerungseinrichtung 20 die erste Förderpumpe 31 und die erste Heisswasserquelle 41 derart an, dass der Brühkammer der Brüheinheit 60 eine Portion Heisswasser mit dem Volumen V0 aus der ersten Heisswasserquelle 41 zugeführt wird, in der Brüheinheit 60 ein Kaffeegetränk mit dem Volumen V0 gebrüht und dieses Kaffeegetränk schliesslich über den Mischknotenpunkt 53 und die Auslasseinheit 70 ausgegeben wird. Ausserdem steuert die Steuerungseinrichtung 20 dass Wegeventil 55 derart an, dass eine Zufuhr von Heisswasser aus der zweiten Heisswasserquelle 42 durch das Wegeventil 55 über die Heisswasser-Ausgabeleitung 52c zum Mischknotenpunkt 53 möglich ist. Weiterhin steuert die Steuerungseinrichtung 20 die zweite Förderpumpe 32 und die zweite Heisswasserquelle 42 derart an, dass eine Portion Heisswasser mit dem Volumen Vm=Va3-VO aus der zweiten Heisswasserquelle 42 dem Mischknotenpunkt 53 zugeführt und über die Auslasseinheit 70 ausgegeben wird.

Die Beimischung der Portion Heisswasser aus der zweiten Heisswasserquelle 42 kann auf verschiedene Weisen erfolgen. Die Steuerungseinrichtung 20 kann die zweite Förderpumpe 32 und die zweite Heisswasserquelle 42 beispielsweise derart ansteuern, dass die Portion Heisswasser aus der zweiten Heisswasserquelle 42 dem Mischknotenpunkt 53 zugeführt wird, während der Brühkammer der Brüheinheit 60 die Portion Heisswasser mit dem Volumen V0 aus der ersten Heisswasserquelle 41 zugeführt wird. In diesem Fall sorgt die Beimischung der Portion Heisswasser aus der zweiten Heisswasserquelle 42 für eine kontinuierliche Verdünnung des in der Brüheinheit 60 gebrühten Kaffeegetränks (während dieses Kaffeegetränk über den Mischknotenpunkt 53 und die Auslasseinheit 70 ausgegeben wird). Alternativ kann die Steuerungseinrichtung 20 die zweite Förderpumpe 32 und die zweite Heisswasserquelle 42 beispielsweise derart ansteuern, dass die Portion Heisswasser aus der zweiten Heisswasserquelle 42 oder zumindest ein Teil dieser Portion Heisswasser dem Mischknotenpunkt 53 zugeführt wird, nachdem der Brühkammer der Brüheinheit 60 die Portion Heisswasser mit dem Volumen V0 aus der ersten Heisswasserquelle 41 zugeführt wurde. In diesem Fall sorgt die Beimischung der Portion Heisswasser aus der zweiten Heisswasserquelle 42 für eine nachträgliche Verdünnung des in der Brüheinheit 60 gebrühten Kaffeegetränks (nachdem dieses Kaffeegetränk über den Mischknotenpunkt 53 und die Auslasseinheit 70 ausgegeben wurde).

Die Steuerungseinheit 20 steuert die Temperatur der Portion Heisswasser aus der zweiten Heisswasserquelle 42 jeweils in Abhängigkeit von dem vom Benutzer ausgewählten Wert für den Parameter Ta: Hat der Benutzer beispielsweise den Wert Ta2 für den Parameter Ta ausgewählt, so wird die Portion Heisswasser aus der zweiten Heisswasserquelle 42 dem Mischknotenpunkt 53 bei einer Temperatur zugeführt, welche höher ist als die Temperatur, bei welcher eine entsprechende Portion Heisswasser aus der zweiten Heisswasserquelle 42 dem Mischknotenpunkt 53 für den Fall zugeführt wird, dass der Benutzer den Wert Ta1 (<Ta2) für den Parameter Ta ausgewählt hat.

## Patentansprüche

1. Brühvorrichtung (100) zum Zubereiten eines Heissgetränkes, insbesondere Kaffeegetränkes, wobei die Brühvorrichtung (100) folgendes aufweist:
- eine Brüheinheit (60);
- mindestens eine erste Heisswasserquelle (41);
- mindestens eine zweite Heisswasserquelle (42);
- mindestens eine Brühwasser-Zuführeinrichtung (31, 51a, 51b) zum Zuführen von Heisswasser aus der mindestens einen ersten Heisswasserquelle (41) zu der Brüheinheit (60);
- mindestens eine Heisswasser-Mischeinrichtung (32, 52c, 53) zum bedarfsweisen Zumischen von Heisswasser aus der mindestens einen zweiten Heisswasserquelle (42) stromabwärts der Brüheinheit (60),
**dadurch gekennzeichnet, dass**
die Brühvorrichtung (100) zusätzlich eine Steuerungseinrichtung (20) zum Ansteuern der mindestens einen Heisswasser-Mischeinrichtung (32, 52c, 53) aufweist, und wobei die Steuerungseinrichtung (20) ausgelegt ist, das Ansteuern in Abhängigkeit einer vorab festgelegten oder festlegbaren Menge (Va1, Va2, Va3) auszugebenden Heissgetränkes vorzunehmen.

2. Brühvorrichtung (100) nach Anspruch 1, wobei die Steuerungseinrichtung (20) ausgelegt ist, das Zumischen einer Portion Heisswasser aus der zweiten Heisswasserquelle (42) zu veranlassen, wenn die Menge auszugebenden Heissgetränks (Va1, Va2, Va3) grösser als ein vorgegebener Wert (Vo) für eine maximale Menge (Vmax) einer der Brüheinheit (60) aus der mindestens einen Heisswasserquelle (41) zuzuführenden Portion Heisswasser ist.

3. Brühvorrichtung (100) nach Anspruch 1 oder 2, wobei die Temperatur des zugemischten Heisswassers aus der mindestens einen zweiten Heisswasserquelle (42) unterschiedlich von der Temperatur des der Brüheinheit (60) zugeführten Heisswassers aus der mindestens einen Heisswasserquelle (41) ist.

4. Brühvorrichtung (100) nach einem der vorhergehenden Ansprüche, wobei die Temperatur des zugemischten Heisswassers aus der mindestens einen zweiten Heisswasserquelle (42) höher ist als die Temperatur des der Brüheinheit (60) zugeführten Heisswassers aus der mindestens einen ersten Heisswasserquelle und insbesondere mehr als 90°C, vorzugsweise mehr als 95°C beträgt.

5. Brühvorrichtung (100) nach einem der vorhergehenden Ansprüche, wobei die Brüheinheit (60) eine über einen Mischknotenpunkt (53) in eine Heissgetränk-Ausgabeleitung (54) mündende Brüheinheit-Ausgabeleitung (51c) aufweist, und wobei die zweite Heisswasserquelle (42) über eine Heisswasser-Ausgabeleitung (52c) mit dem Mischknotenpunkt (53) verbunden ist.

6. Brühvorrichtung (100) nach Anspruch 5, wobei der Mischknotenpunkt (53) stromaufwärts einer mit mindestens einem Kaffeegetränkeauslass (71a, 71b) versehenen Auslasseinheit (70) angeordnet ist.

7. Brühvorrichtung (100) nach Anspruch 5, wobei der Mischknotenpunkt (53) innerhalb einer mit mindestens einem Kaffeegetränkeauslass (71a, 71b) versehenen Auslasseinheit (70) angeordnet ist.

8. Brühvorrichtung (100) nach einem der vorhergehenden Ansprüche, wobei die mindestens eine Heisswasser-Mischeinrichtung (32, 52c, 53) zusätzlich ein ansteuerbares Wegeventil (55) aufweist, welches zum bedarfsweisen Zumischen des Heisswassers aus der mindestens einen zweiten Heisswasserquelle ausgebildet ist.

9. Brühvorrichtung (100) nach einem der vorhergehenden Ansprüche, wobei die Brühvorrichtung (100) ferner einen mit der mindestens einen zweiten Heisswasserquelle (42) verbundenen Ventilblock (50) zum bedarfsweisen Zuleiten von Heisswasser aus der zweiten Heisswasserquelle (42) zu einem weiteren Auslass, vorzugsweise zu einer Milchschäumdüse (73), aufweist.

10. Brühvorrichtung (100) nach einem der vorhergehenden Ansprüche, wobei die Brühvorrichtung (100) ferner eine Einrichtung zum bedarfsweisen Zuführen eines Reinigungsfluides zu der Heissgetränk-Ausgabeleitung (54) aufweist, und wobei das Reinigungsfluid insbesondere mit mindestens einer der Heisswasserquellen (41, 42) erzeugter Wasserdampf und vorzugsweise mit der mindestens einen zweiten Heisswasserquelle (42) erzeugter Wasserdampf ist.

11. Verfahren zum Zubereiten eines Heissgetränkes, insbesondere Kaffeegetränkes, in einer Brühvorrichtung (100), wobei das Verfahren die folgenden Verfahrensschritte aufweist:
- Festlegen einer Menge auszugebenden Heissgetränkes (Va1, Va2, Va3);
- Zuführen einer Heisswasserportion aus mindestens einer ersten Heisswasserquelle (41) zu einer Brüheinheit;
- Ermitteln eines Zumischbedarfes von Heisswasser in Abhängigkeit von der festgelegten Menge (Va1, Va2, Va3);
- wenn ein Zumischbedarf ermittelt wurde: Zumischen von Heisswasser aus mindestens einer zweiten Heisswasserquelle (42) stromabwärts der Brüheinheit (60);
- Ausgeben des Heissgetränkes in einer Heissgetränk-Ausgabeleitung (54).

12. Verfahren nach Anspruch 11, wobei
ein Zumischbedarf besteht, wenn die Menge auszugebenden Heissgetränks (Va1, Va2, Va3) grösser als ein vorgegebener Wert (Vo) für eine maximale Menge (Vmax) einer der Brüheinheit (60) aus der mindestens einen Heisswasserquelle (41) zuzuführenden Portion Heisswasser ist.

13. Verfahren nach Anspruch 11 oder 12, wobei die Temperatur des zugemischten Heisswassers aus der mindestens einen zweiten Heisswasserquelle (42) unterschiedlich von der Temperatur des der Brüheinheit (60) zugeführten Heisswassers aus der mindestens einen Heisswasserquelle (41), insbesondere höher als die Temperatur des der Brüheinheit (60) zugeführten Heisswassers aus der mindestens einen ersten Heisswasserquelle (41), ist und vorzugsweise mehr als 90°C, besonders vorzugsweise mehr als 95°C beträgt.

14. Verfahren nach einem der Ansprüche 11 bis 13, wobei zusätzlich folgender Verfahrensschritt vorgesehen ist:
- Zuführen von Heisswasser aus der zweiten Heisswasserquelle (42) zu einem weiteren Auslass, vorzugsweise zu einer Milchschäumdüse (73).

15. Verfahren nach einem der Ansprüche 11 bis 14, wobei zusätzlich folgender Verfahrensschritt vorgesehen ist:
- Zuführen eines Reinigungsfluides, insbesondere von mit mindestens einer der Heisswasserquellen (41, 42) und vorzugsweise mit der mindestens einen zweiten Heisswasserquelle (42) erzeugtem Wasserdampf, in die Heissgetränk-Ausgabeleitung (54).
